# EUROPEAN PATENT APPLICATION

(11) **EP 2 704 085 A1**
(43) Date of publication of application: **05.03.2014**
(21) Application number: 13004128.8
(22) Date of filing: 20.08.2013
(51) Int. Cl.: G06Q 30/02

(54) **Advertising service server and digital signage device**

(30) Priority: 31.08.2012 KR 20120096098
(71) Applicant: LG Electronics, Inc., Seoul, 150-721 (KR)
(72) Inventor: Park, Jaeha, 137-724 Seoul (KR); Choi, Jongryong, 137-724 Seoul (KR)
(74) Representative: Gunzelmann, Rainer

(57) **Abstract**

The present invention provides an advertising service server. The advertising service server can provide a user terminal with a user interface for selecting a digital signage device to display advertising contents and a user interface for selecting an advertising area and period of the selected digital signage device.

## Description

### BACKGROUND OF THE INVENTION

### Cross-Reference to Related Applications

This application claims the priority benefit of earlier filing date and right of priority to Korean Patent Application No. 10-2012-0096098, filed on August 31, 2012, the contents of which are hereby incorporated by reference herein in their entirety.

### Field of the Invention

The present invention relates to an advertising service technology and more particularly, a digital signage device capable of displaying advertising contents provided from a user terminal and an advertising service server capable of controlling operation of such digital signage devices.

### Discussion of the Related Art

Digital signage is a form of digital display device used as a communication tool with which corporate marketing, advertisement, and training effect can be obtained and customer experience can be derived by providing not only broadcasting programs but also particular information at public areas such as hotels, hospitals, subway stations, and the like. Digital signage is characterized to render a traditional commercial digital information display device more attractive by providing a comprehensive solution including software tools controlling essential functions of the devices and a management platform.

More specifically, digital signage is a form of medium displaying various kinds of contents and commercial advertisement by installing a display device such as LCD (Liquid Crystal Display), PDP (Plasma Display Panel), OLED (Organic Light Emitting Diode), and so on at a particular outdoor place or at devices such as street furniture. Digital signage devices are now installed along a moving path of people: inside an elevator of an apartment building, a subway station, a subway train, or a bus; at a university, bank, convenience store, discount store, shopping mall, and so on.

The initial form of such digital signage mostly consisted of a simple large electronic display, an LCD video in a subway train or a bus, PDP advertisement in a station, digital information display (DID), and the like. However, more recent form of digital signage has gone beyond simple information provision and exposure to advertisement toward interactive communication revved up by such technologies as touchpad, high speed Internet, and the like, from which public participation can be facilitated.

### SUMMARY OF THE INVENTION

An objective of the present invention is to provide a digital signage device capable of display advertisement contents provided by a user terminal and an advertising service server capable of controlling operation of digital signage devices.

Another objective of the present invention is to provide a digital signage device and an advertising service server capable of controlling digital signage devices, by which a user can select a digital signage device to display advertising contents and select an advertising area and period for the selected digital signage device.

Still another objective of the present invention is to provide a digital signage device which directly provides a user interface intended for creating advertising contents through a touchscreen installed and a user interface intended for selecting an advertising area and period.

Technical objectives of the present invention are not limited to those specific objectives above and other technical objectives should be clearly understood by those skilled in the art from the descriptions provided below.

To achieve the objective above, an advertising service server according to one embodiment of the present invention comprises a communication unit carrying out a communication function with a user terminal; an interfacing module providing the user terminal with a user interface for selecting a digital signage device to display advertising contents from among a plurality of digital signage devices; selecting an advertising area in a digital signage device to display advertising contents and selecting an advertising period in a digital signage device to display advertising contents; and a controller displaying the advertising contents received from the user terminal on the advertising area of the digital signage device selected through the user interface during the advertising period selected through the user interface.

To achieve the objective above, an advertising service server according to another embodiment of the present invention comprises a communication unit receiving advertising contents transmitted from a user terminal and receiving information for identifying a digital signage device; a controller selecting a digital signage device to display advertising contents from among a plurality of digital signage devices based on the received information; an interfacing module providing a user interface intended for selecting an advertising area in a digital signage device to display advertising contents and selecting an advertising period in a digital signage device to display advertising contents through at least one of the user terminal and the selected digital signage device; and a contents providing module displaying advertising contents received from the user terminal through an advertising area selected through the user interface out of an advertising area of the selected digital signage device during an advertising period selected through the user interface.

To achieve the objective above, a digital signage device according to one embodiment of the present invention comprises a touchscreen; a communication unit carrying out a communication function with a user terminal and an advertising service server; an interfacing module providing a user interface intended for selecting an advertising area and period according to which advertising contents are displayed through at least one of the user terminal and the touchscreen; and a controller matching an advertising area and period selected through the user interface to advertising contents transmitted from the user terminal based on short range wireless communication to and from the user terminal, receiving from the advertising service server the advertising contents transmitted from the user terminal, and displaying the advertising contents on an advertising area selected through the user interface during an advertising period selected through the user interface.

To achieve the objective above, a digital signage device according to yet another embodiment of the present invention comprises a touchscreen; an interfacing module providing through the touchscreen a first user interface for selecting an advertising area and period in the touchscreen to display advertising contents and a second user interface for receiving data to create advertising contents; and a controller displaying advertising contents created based on data input through the second user interface on an advertising area of the touchscreen selected through the first user interface during an advertising period selected through the first user interface.

A user accessing an advertising service server according to the present invention through a user terminal can select a digital signage device to display advertising contents and select an advertising area and period in the digital signage selected by the user.

A user can select a digital signage device to display advertising contents by operating the digital signage device according to the present invention and select an advertising area and period in the digital signage device selected.

A user of a digital signage device according to the present invention can create advertising contents through a user interface provided through a touchscreen and set up an advertising area and period of the created advertising contents.

### BRIEF DESCRIPTION OF THE DRAWINGS

The accompany drawings, which are included to provide a further understanding of this document and are incorporated on and constitute a part of this specification illustrate embodiments of this document and together with the description serve to explain the principles of this document.
FIG. 1 illustrates implementation examples of a digital signage device according to the present invention;
FIG. 2 illustrates examples of utilizing a digital signage device according to the present invention;
FIG. 3 illustrates a structure of an advertising service system according to the present invention;
FIG. 4 is a block diagram of an advertising servicer server according to the present invention;
FIG. 5 is a flow diagram illustrating one example of an advertising service method carried out in an advertising service server according to the present invention;
FIG. 6 is one example of a user interface for selecting a digital signage device to display advertising contents, which is provided to a user terminal according to an advertising service method of FIG. 5;
FIG. 7 is one example of a user interface for selecting a digital signage device to display advertising contents, which is provided to a user terminal according to an advertising service method of FIG. 5;
FIG. 8 is one example of a user interface for approving an advertising service charge for advertising contents, which is provided to a user terminal according to an advertising service method of FIG. 5;
FIG. 9 is one example of a user interface for providing details of an advertising service charge, which is provided to a user terminal according to an advertising service method of FIG. 5;
FIG. 10 is a flow diagram illustrating another example of an advertising service method carried out in an advertising service server according to the present invention;
FIG. 11 is one example of a user interface for searching for a digital signage device, which is provided to a user terminal according to an advertising service method of FIG. 10;
FIG. 12 illustrates examples of a message provided to a user terminal 300 for an advertising service server according to the present invention to inform the end of an advertising service;
FIG. 13 illustrates an example of using a digital signage device according to the present invention;
FIG. 14 illustrates a case where an advertising service system 10 according to the present invention is controlled by a server manager;
FIG. 15 illustrates an example of using an advertising service system according to the present invention;
FIG. 16 is a flow diagram illustrating another example of an advertising service method carried out in an advertising service server according to the present invention;
FIG. 17 illustrates an example of transmitting advertising contents and identifying information of a digital signage device from a user terminal to an advertising service server according to an advertising service method of FIG. 16;
FIG. 18 illustrates a series of procedures through which an advertising service is carried out according to an advertising service method of FIG. 16;
FIG. 19 is a flow diagram illustrating still another method of an advertising service method carried out in an advertising service server according to the present invention;
FIG. 20 is a block diagram of an advertising service server according to the present invention;
FIG. 21 is a flow diagram illustrating a further method of an advertising service method carried out in a digital signage device according to the present invention;
FIG. 22 illustrates an example where created advertising contents are associated with a digital signage device and a user terminal of the present invention according to an advertising service method of FIG. 21;
FIG. 23 illustrates another example where created advertising contents are associated with a digital signage device and a user terminal of the present invention according to an advertising service method of FIG. 21;
FIG. 24 is a flow diagram illustrating an additional example of an advertising service method carried out in a digital signage device;
FIG. 25 illustrates one example of the user's creating advertising contents according to an advertising service method of FIG. 24;
FIG. 26 illustrates a case where the user adds an image stored in the user terminal to advertising contents according to an advertising service method of FIG. 24; and
FIG. 27 illustrates a case where the user modifies an image included in advertising contents by using a touch input on a touchscreen of a digital signage device according to the present invention.

### DETAILE DESCRIPTION OF THE INVENTION

To fully understand the present invention and the operational benefits of the present invention and objectives achieved from embodiment of the present invention, one should refer to the appended drawings illustrating preferred embodiments of the present invention and descriptions provided in the appended drawings.

In case a constituting element of the present invention attempts to 'transmit or deliver' data or a signal to another constituting element, the constituting element may transmit or deliver the data or the signal directly to the another constituting element or transmit or deliver the data or the signal to the another constituting element via at least one yet another constituting element. Also, a suffix "module" or "unit" meant for constituting elements of the present invention described below is introduced or used interchangeably for the convenience of description only; therefore, the suffixes themselves do not carry roles or meanings distinguished from each other.

The objectives, characteristics, and benefits of the present invention will be more clearly understood through detailed descriptions below with reference to appended drawings. In what follows, preferred embodiments according to the present invention will be described in detail with reference to appended drawings. Throughout the document, the same reference numbers represent the same constituting elements. Also, if it is determined that specific descriptions about related structure of functions well-known to the public may mislead the technical principles of the present invention, the corresponding descriptions will be omitted.

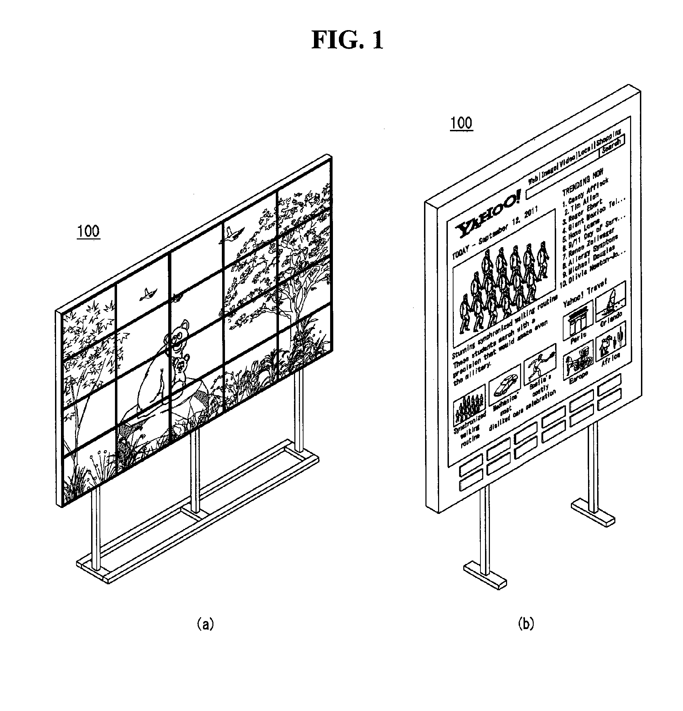

FIG. 1 illustrates implementation examples of a digital signage device according to the present invention. With reference to FIG. 1, it can be known that a digital signage device 100 according to the present invention can provide a multi-vision function based on a plurality of display modules and each display module can provide contents.

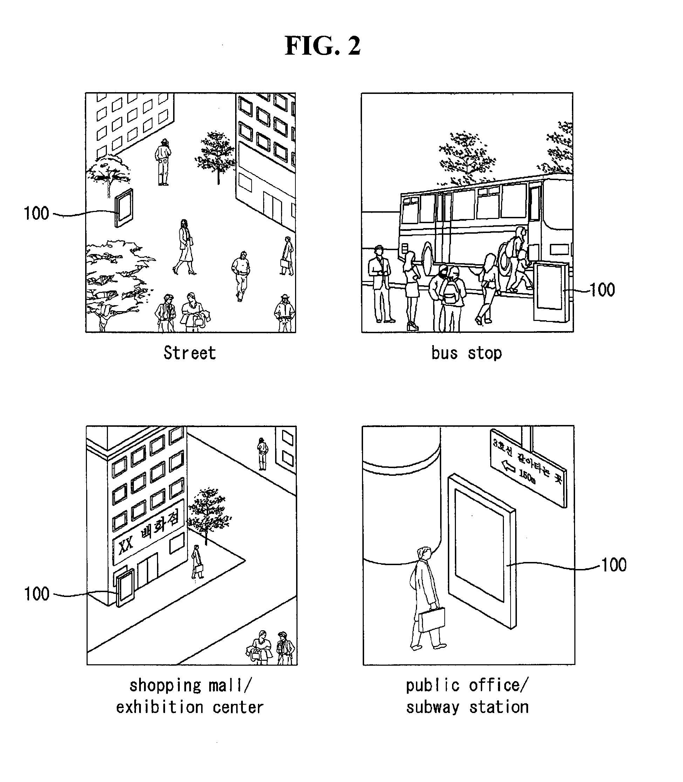

FIG. 2 illustrates examples of utilizing a digital signage device 100 according to the present invention. With reference to FIG. 2, the digital signage device 100 can display various types of advertising contents being installed on the street, at a bust stop, shopping mall, exhibition center, public office, subway station, and so on.

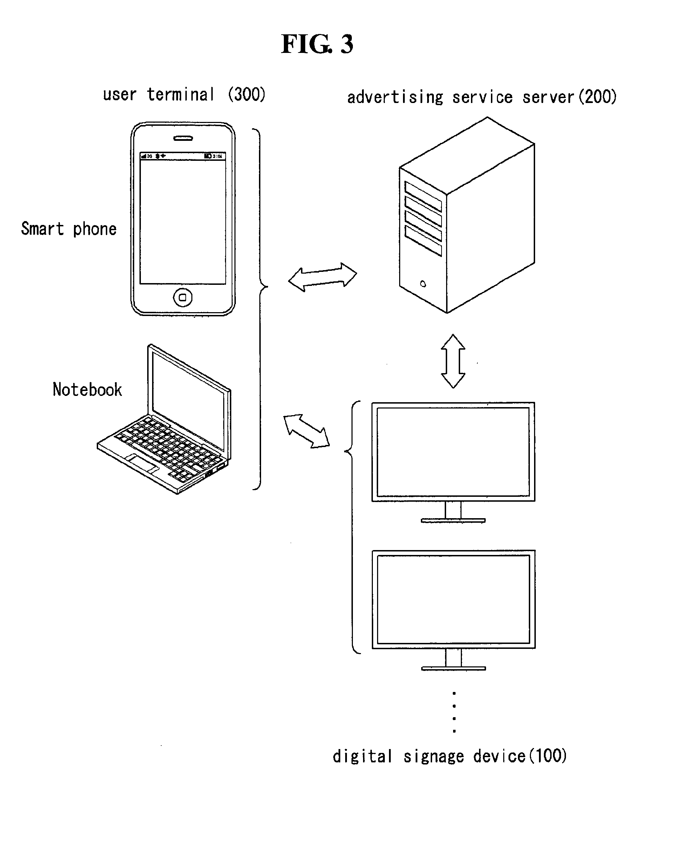

FIG. 3 illustrates a structure of an advertising service system 10 according to the present invention. With reference to FIG. 3, the system 10 comprises a digital signage device 100, an advertising service server 200, and a user terminal 300 connected to each other through a network.

The digital signage device 100 displays advertising contents. The advertising contents may be those that have been transmitted directly from the user terminal 300 to the digital signage device 100. The advertising contents can be simple text, image, video, or a combination of the above.

Also, the advertising contents transmitted form the user terminal 300 can be stored in the advertising service server 200; the advertising contents can then be provided from the advertising servicer server 200 to the digital signage device 100.

Meanwhile, the user, through operation of the digital signage device 100, selects an advertising area of the digital signage device previously selected on which advertising contents are displayed. For example, in case the selected digital signage device 100 includes a plurality of display modules as shown in FIG. 1(a), the user can select at least one from among the plurality of display modules as a display module through which advertising contents are displayed.

An another example, in case the selected digital signage device includes one display module, the user can select at least one from among a plurality of advertising areas provided through the one display module.

In other words, the digital signage device 100 can provide a user interface for selecting a digital signage device through which the user displays advertising contents or a user interface for selecting an advertising area to display advertising contents in the selected digital signage device.

Also, the digital signage device 100 can include a touchscreen as a data input/output means and the selection operation through a user interface can be realized through a touch input on the touchscreen.

The digital signage device 100 can be implemented by a display device including a large electronic display, a display device such as PDP or LCD, a touchscreen, a hologram display device, and the like; however, the present invention is not limited to the devices mentioned above.

The advertising service server 200 can control the operation of the digital signage device 100. For example, the advertising service server 200 controls the digital signage device 100 to display advertising contents according to a predetermined schedule.

The advertising service server 200 controls, like the digital signage device 100, controls the digital signage device 100 and/or the user terminal 100 to provide a user interface for selecting a digital signage device to display advertising contents and a user interface for selecting an advertising area and period for the selected digital signage device.

The user terminal 300 transmits various types of advertising contents to be displayed through the digital signage device 100 to the digital signage device 100 and/or the advertising service server 200 through a wired/wireless communication network. The user terminal 300 can also be used as a means providing the user interface. In other words, the user can use the user interface through at least one of the digital signage device 100 and the user terminal 300.

As shown in FIG. 3, the user terminal 300 may be a mobile device such as a smart phone or a notebook. However, the present invention is not limited to the above example. For example, the user terminal 300 may correspond to a mobile device such as a tablet PC or a fixed-type electronic device such as a PC or a smart TV.

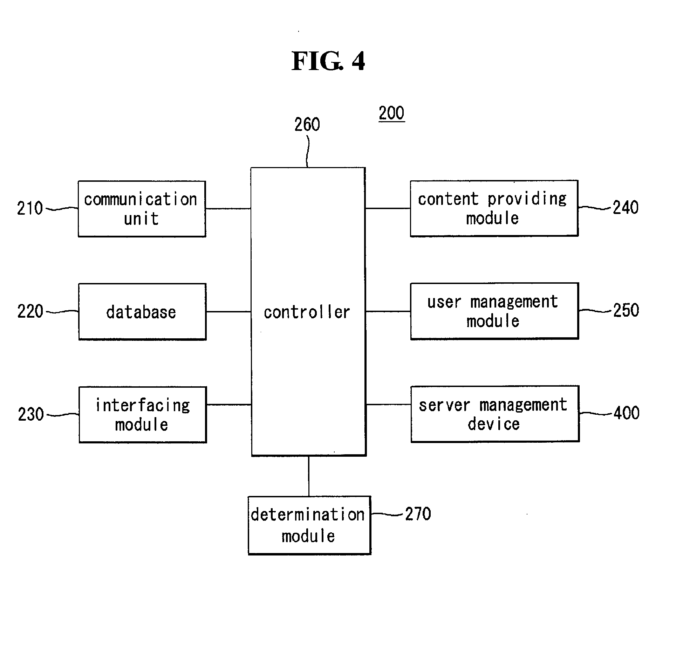

FIG. 4 is a block diagram of an advertising servicer server according to the present invention. With reference to FIG. 4, the advertising service server 200 comprises a communication unit 210, a database 220, an interfacing module 230, a content providing module 240, a user management module 250, a controller 260, a determination module 270, and a server management device 400. The constituting elements shown in FIG. 4 are not essential to construct an advertising service server; therefore, the advertising service server 200 may include more than the illustration of FIG. 4 or may include a smaller number of elements. In what follows, the constituting elements will be described one by one.

The communication unit 210 carries out a function of wired or wireless communication between the digital signage device 100 and the user terminal 300. For example, the advertising service server 200 is capable of communicating various types of data required for an advertising service through the communication unit 210 with the digital signage device 100 and the user terminal 300. As a matter of course, the various types of data include advertising contents itself.

The advertising service server 200 receives identifying information for selecting a device to display advertising contents from among a plurality of digital signage devices managed through the communication unit 210. The identifying information includes an identifier for a digital signage device, location information of the user terminal 300 at the time of transmitting the identifying information, location information of the selected digital signage device, and so on. However, the technical scope of the present invention is not limited to the above description.

The database 220 stores a program required for operating the advertising service server 200. Also, the database 220 temporarily or permanently stores data coming in or out through the communication unit 210. For example, the database 220 stores various types of data related to an advertising service carried out by the advertising service server 200. The database 220 can further store membership information of an advertising service site operated by the advertising service server 200.

Moreover, the database 220 can store various types of information about a plurality of digital signage devices managed by the advertising service server 200. For example, the database 220 can combine and store an identifier, an installation location, type, a pricing criterion of a particular digital signage device intimately with each other.

At this time, the various types of data related to an advertising service may include advertising contents to be displayed through the digital signage device 100, a display schedule of advertising contents, information about a user providing advertising contents, and so on. However, it should be noted that the technical scope of the present invention is not limited to the above description.

The database 220 includes at least one type of storage medium among flash memory type, hard disk type, multimedia card micro type, card type memory (for example, SD or XD memory), RAM (Random Access Memory), SRAM (Static Random Access Memory), ROM (Read-Only Memory), EEPROM (Electrically Erasable Programmable Read-Only Memory), PROM (Programmable Read-Only Memory), magnetic memory, magnetic disk, and optical disk. The advertising service server 200 can operate in cooperation with a web storage providing a storage function of the database 220 in the Internet.

The interfacing module 230 provides various types of user interface for the digital signage device 100 and the user terminal 300. As described above, the user interface includes an interface for selecting a digital signage device to display advertising contents, an interface for selecting an advertising area through which advertising contents are displayed or period, and so on. However, the technical scope of the present invention is not limited to the above description.

The content providing module 240 provides advertising contents stored in the database 220 to a digital signage device selected by the user. Display of the advertising contents can be carried out according to a schedule stored in the database 220. The schedule is determined by reflecting advertising periods for a plurality of advertising contents selected by a plurality of users.

The user management module 250 notifies a user terminal of information required for an advertising service. For example, the user management module 250 can transmit a message indicating acceptance of an advertising service request issued by the user, a message informing expiration of the advertising period of advertising contents, a message indicating completion of an approval process for an advertising service request, and so on.

The determination module 270, based on identification information received from the user terminal 300 and/or a digital signage device, selects a digital signage device to display advertising contents transmitted from the user terminal 300 from among a plurality of digital signage devices managed by the advertising service server 200.

At this time, the identification information includes an identifier of a digital signage device selected by the user, location information of the user terminal 300 at the time of transmission of the identification information, location information of the selected digital signage device, and so on. However, the technical scope of the present invention is not limited to the above description.

The interfacing module 230, content providing module 240, user management module 250, and determination module 270 can be individually implemented by hardware, software, or a combination of both. For example, the interfacing module 230, content providing module 240, user management module 250, and determination module 270 can be realized in the form of an integrated circuit to carry out a particular function assigned to each of the modules.

The controller 260 typically controls the overall operation of an advertising service server 200. The controller 260 carries out various computational tasks required for operating the advertising service server 200 and controls operation of other constituting elements of the advertising service server 200 to carry out an advertising service. Although the controller 260 is represented by one block in FIG. 4, the controller 260 can include a plurality of hardware and/or software components intended to carry out their own functions or roles.

The controller 260, interfacing module 230, content providing module 240, user management module 250, and determination module 270 are shown separately from each other in FIG. 4. However, at least one or at least part of the interfacing module 230, content providing module 240, and user management module 250 can have a common hardware or software element(s) shared by the controller 260.

Various embodiments described here can be implemented in a recording medium which can be readable by a computer or a similar device by using software, hardware, or a combination of both.

As for hardware implementation, an embodiment of the present invention can be realized by using at least one of ASICs (application specific integrated circuits), DSPs (digital signal processors), DSPDs (digital signal processing devices), PLDs (programmable logic devices), FPGAs (field programmable gate arrays, processors, controllers, micro-controllers, microprocessors, an electrical unit meant for carrying out a function. In some case, such embodiments can be implemented by the controller 260.

As for software implementation, embodiments of a procedure or a function can be realized by along with separate software modules supporting operation or at least one function. Software codes are implemented by a software application written in a relevant programming language. Also, software codes are stored in the database 220 and can be carried out by the controller 260.

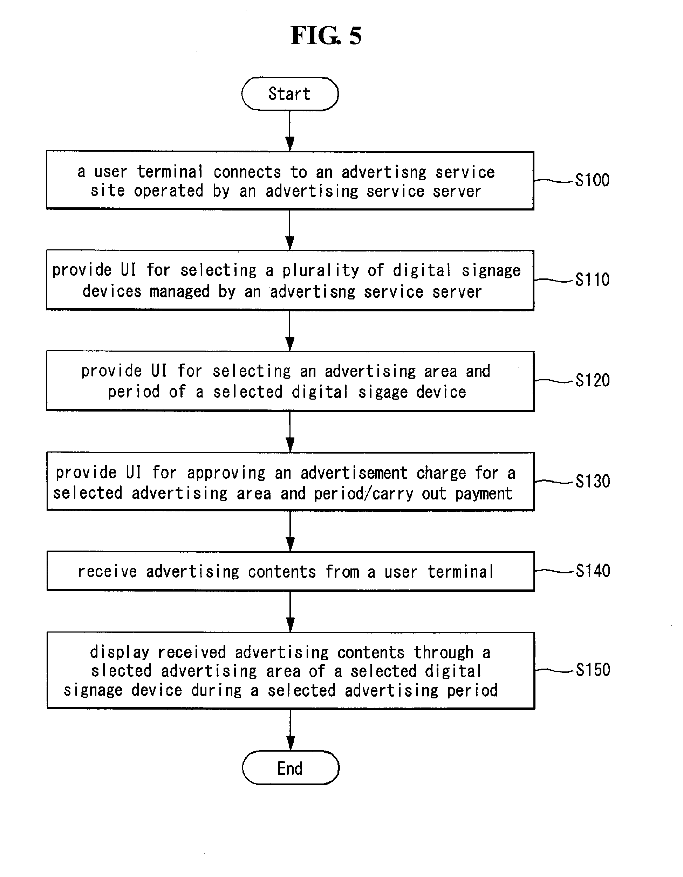

FIG. 5 is a flow diagram illustrating one example of an advertising service method carried out in an advertising service server according to the present invention. In what follows, the advertising service method will be described with reference to related drawings.

The user terminal 300 connects to an advertising service site operated by the advertising service server 200, S100. Then the interfacing module 230 of the advertising service server 200 provides the user terminal 300 with a user interface for selecting a device desired by the user from among a plurality of digital signage devices managed by the advertising service server 200 S110.

Then the user is enabled to select through the user interface a digital signage device to display advertising contents. In this respect, it is preferable that the user interface includes information about location, shape, and so on about each of the plurality of through the user interfaces.

If the user selects a digital signage device, the interfacing module 230 provides the user terminal 300 with a user interface for the user to select an advertising area through which advertising contents are displayed and an advertising period in the selected digital signage device S120.

The operational procedure described above is based on the assumption that the selected digital signage device can divide a display area into a plurality of advertising areas and display advertising contents different from each other in the individual advertising areas. Meanwhile, an advertising service charge can be set up differently depending on an advertising area of the selected digital signage device.

If the user selects an advertising area and period for the selected digital signage device, the interfacing module 230 provides the user terminal 300 with a user interface meant for an advertising price approval for the selected advertising area and period and carries out the approval process based on the input received through the user interface S130.

Next advertising contents are received from the user terminal 300, S140. Afterwards the controller 260 of the advertising service server 200 stores the received advertising contents into the database 220. Next the content providing module 240 of the advertising service server 200 displays the received advertising contents through the selected advertising area of the selected digital signage device during the selected advertising period S150.

According to the advertising service method of FIG. 5, after a digital signage device to display advertising contents is selected, an advertising area and period in the selected digital signage device are selected.

However, an advertising service server 200 according to the present invention first provides the user terminal 300 with a user interface meant for selecting an advertising area in a digital signage device to display advertising contents and/or an advertising period in a digital signage device to display advertising contents; and provides the user terminal 300 with a user interface for selecting a digital signage device to display advertising contents. The same procedure is applied to a user interface intended for an advertising price approval.

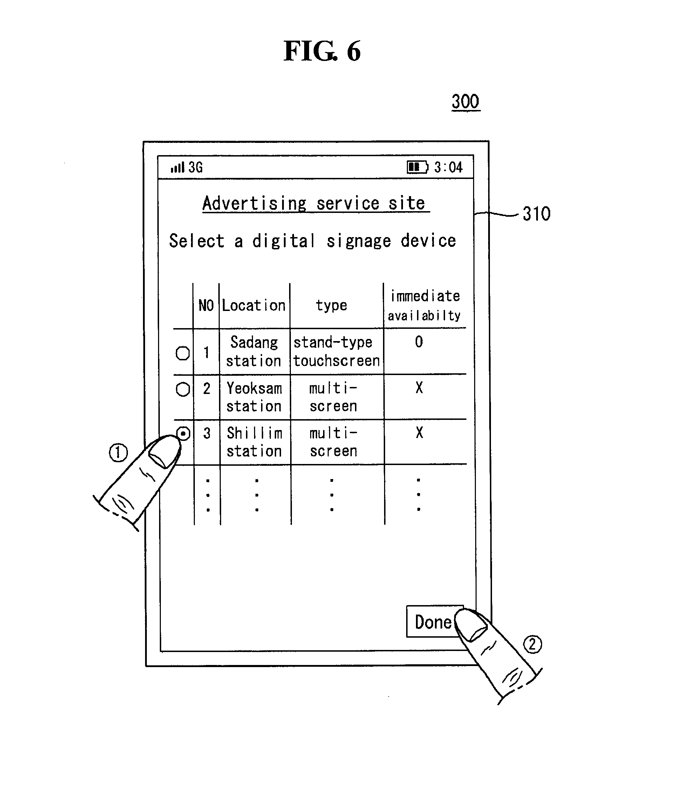

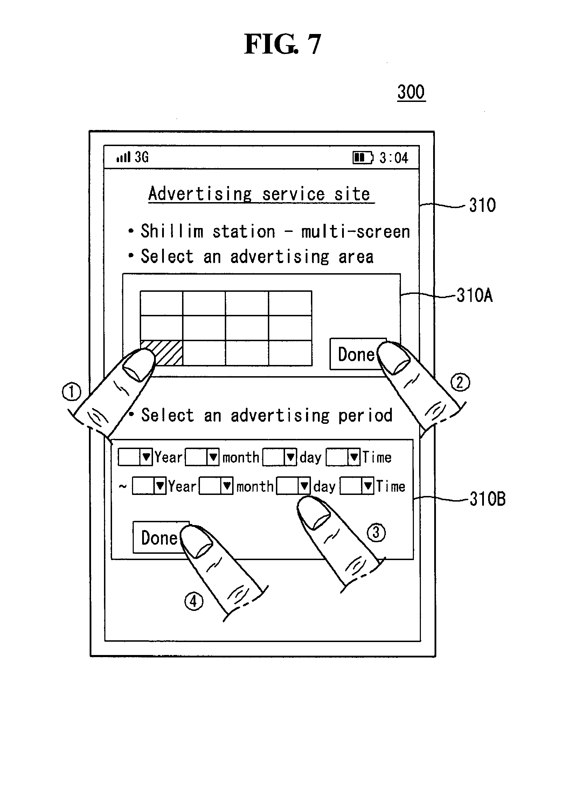

FIG. 6 is one example of a user interface for selecting a digital signage device to display advertising contents, which is provided to a user terminal 300 according to an advertising service method of FIG. 5. As shown in FIG. 6, the user terminal 300 can be implemented as a smart phone equipped with a touchscreen. The embodiments to be described in FIGS. 7 to 9 can also be implemented in the same manner as above.

With reference to FIG. 6, the user interface includes information about an installation location of a digital signage device, implementation type thereof, possibility of instant publication of advertising contents, and so on. However, it should be noted that the information provided through the user interface is not limited to the example above. For example, the user interface may additionally provide the image of a digital signage device, a map indicating the installation location thereof, and the like.

As shown in FIG. 6, the user touches the area corresponding to digital signage device in the user interface and by touching a finish button, selects a digital signage device to display his or her advertising contents.

FIG. 7 is one example of a user interface for selecting a digital signage device to display advertising contents, which is provided to a user terminal according to an advertising service method of FIG. 5.

With reference to the user interface, it can be known that the user has selected a "digital signage device in the form of a multi-screen installed at Shillim station". The user interface provides an area 310A meant for selecting an advertising area in the selected digital signage device.

As shown in FIG. 7, the user ① touches an area corresponding to one of a plurality of advertising areas provided by the selected digital signage device and ② selects an advertising area in which advertising contents are displayed by touching a finish button.

The user can call off the selection about an advertising area already selected. For example, if the user touches again the advertising area selected by the user's touch input, the selection about the advertising area can be cancelled.

The user interface provides an area 310B meant for selecting an advertising period during which an advertisement is published in an advertising area of the selected digital signage device.

Also, as shown in FIG. 7, the user ③ configures an advertising period during which advertising contents are displayed by touching the selected advertising area and ④ selects an advertising period by touching a finish button.

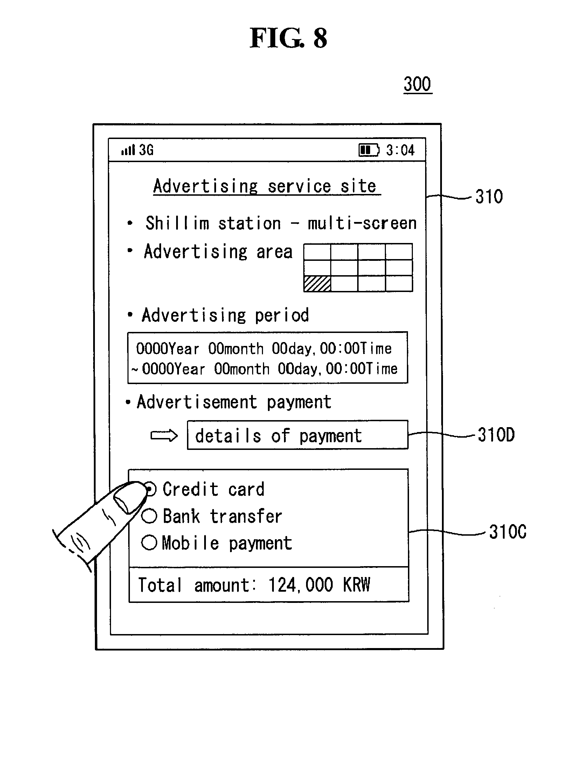

FIG. 8 is one example of a user interface for approving an advertising service charge for advertising contents, which is provided to a user terminal according to an advertising service method of FIG. 5.

With reference to the user interface, it can be known that the user has selected a "lower left-side area of a digital signage device in the form of a multi-screen installed at Shillim station" and specified an advertising period.

With reference to FIG. 8, the user interface provides an interface area 310C for selecting an approval means for "a total amount of 124,000 KRW" and the user selects one from among credit card payment, account transfer, mobile communication payment method. Also, the user interface further provides a button 310D intended for inquiring details of payment for the total amount. If the user touches the button 310D, the user terminal 300 displays specific details of payment.

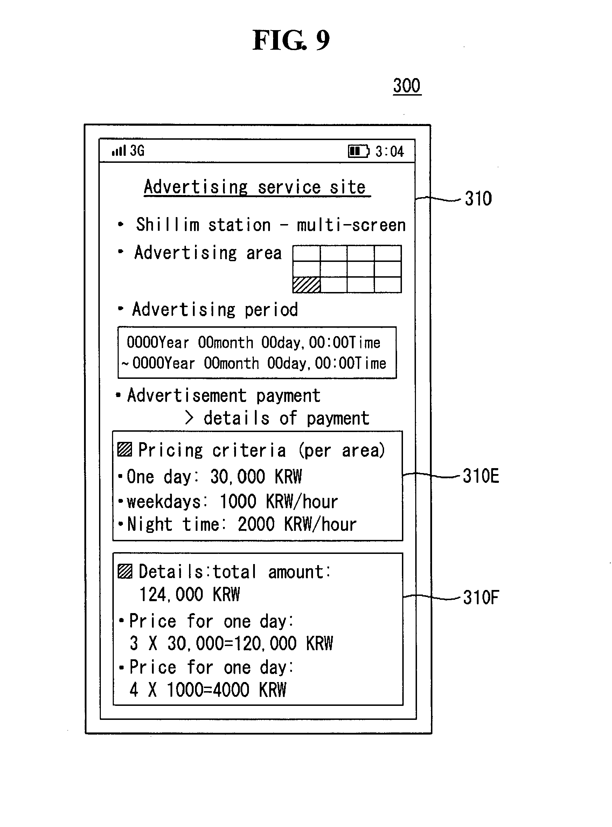

FIG. 9 is one example of a user interface for providing details of an advertising service charge, which is provided to a user terminal 300 according to an advertising service method of FIG. 5.

With reference to FIG. 9, the user interface to provide details of advertising service charges comprises an area meant for pricing criteria 310E and an area meant for details of estimated service charges according to the pricing criteria 310F.

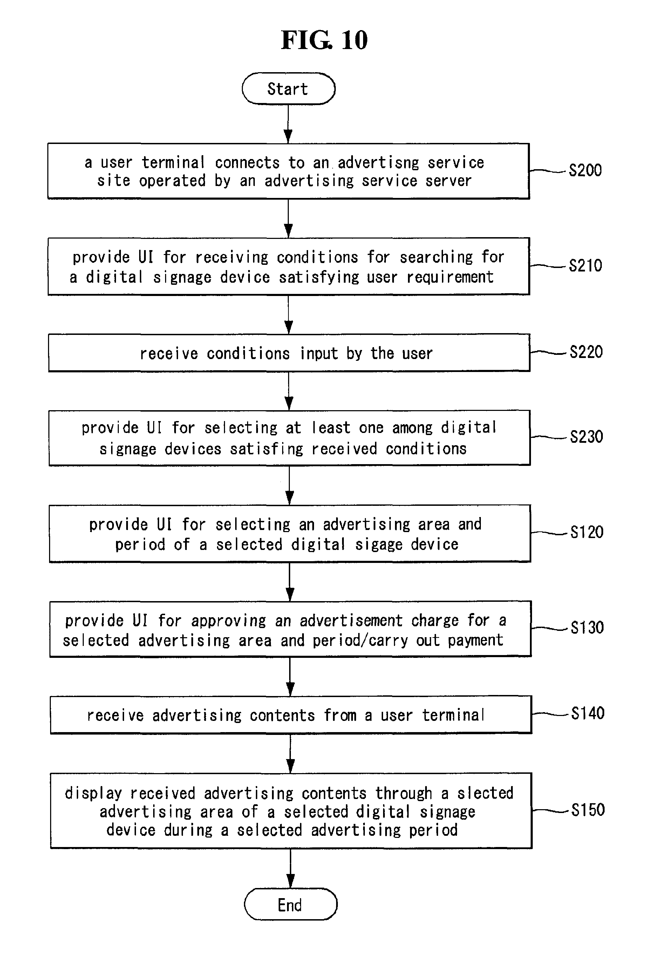

FIG. 10 is a flow diagram illustrating another example of an advertising service method carried out in an advertising service server 200 according to the present invention. In what follows, the advertising service method will be described with reference to related drawings.

The user terminal 300 connects to an advertising service site operated by the advertising service server 200, S200. Then the interfacing module 230 of the advertising service server 200 provides the user terminal 300 with a user interface for selecting a device desired by the user from among a plurality of digital signage devices managed by the advertising service server 200 S210.

Then the user inputs search conditions through the user interface and transmits the search conditions to the advertising service server 200 and the advertising service server 200 receives the search conditions provided by the user S220.

Then the controller 260 of the advertising servicer server 200 searches a plurality of digital signage devices managed by the controller 260 for a digital signage device satisfying the conditions received and provides the user terminal 300 with a user interface for selecting at least one of the searched digital signage devices S230.

The subsequent steps after the user selects a particular digital signage device through the user interface may correspond to the steps S120 to S150 shown in FIG. 5. Therefore, detailed description of a procedure after selection of a digital signage device will be omitted.

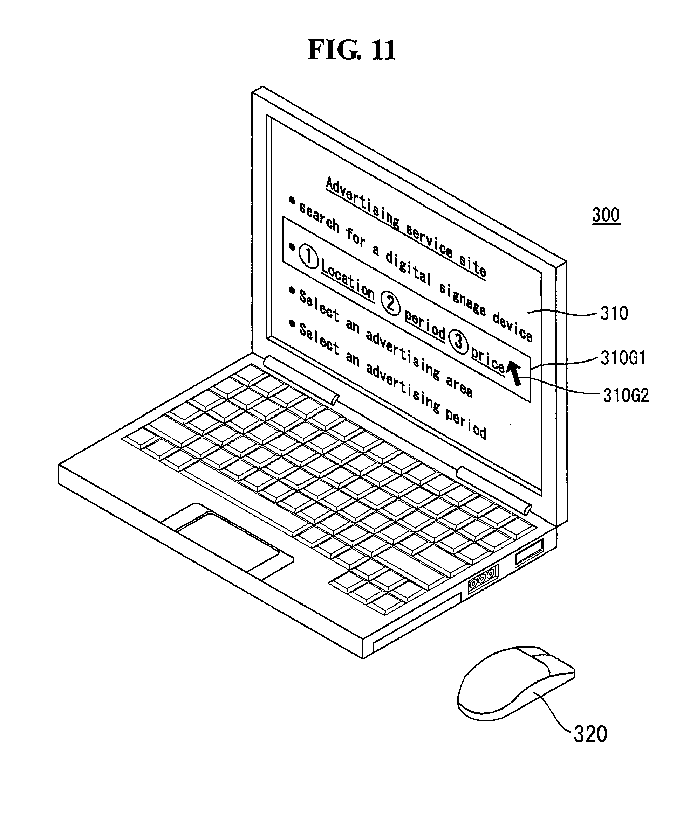

FIG. 11 is one example of a user interface for searching for a digital signage device, which is provided to a user terminal 300 according to an advertising service method of FIG. 10. With reference to FIG. 11, the user terminal 300 may be implemented as a notebook computer.

With reference to the user interface 310G1, the user can search for a preferred digital signage device based on an installation location, advertising period of advertising contents, advertising prices, and the like. More specifically, the user can select a search criterion by placing a cursor 310G2 tracking a trajectory of a mouse on his or her preferred search criterion and clicking the mouse 320. Meanwhile, search criteria provided by a user interface provided by the advertising service server 200 according to the present invention are not limited to the above examples.

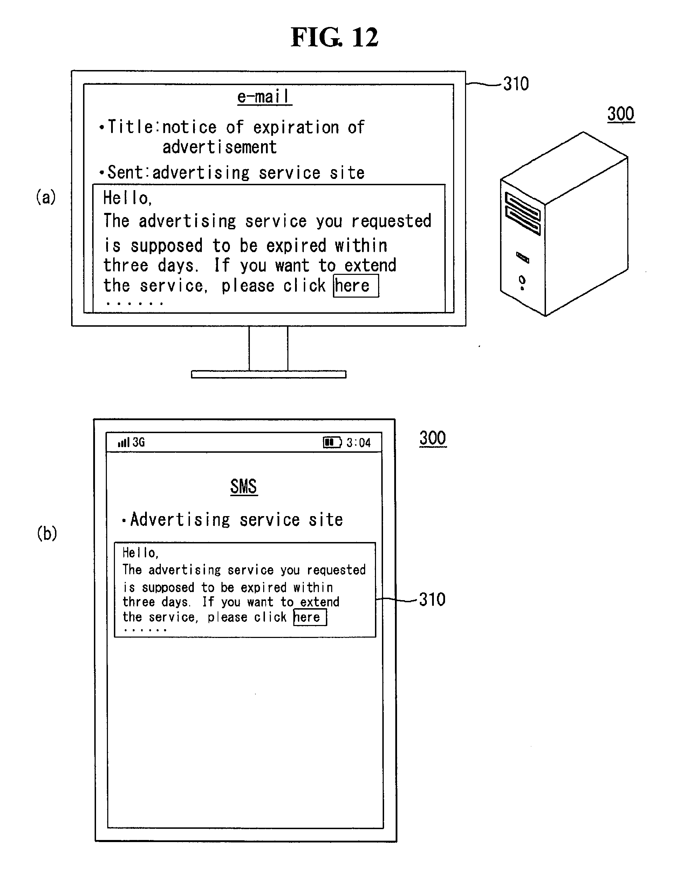

FIG. 12 illustrates examples of a message provided to a user terminal 300 for an advertising service server 200 according to the present invention to inform the end of an advertising service.

FIG. 12(a) indicates that the message can be provided to the user terminal 300 in the form of an e-mail while FIG. 12(b) indicates that the message can be provided to the user terminal 300 through SMS. As can be seen from the figure, the message includes information indicating possibility of extension of an advertising service as well as information indicating imminent expiration of the advertising service.

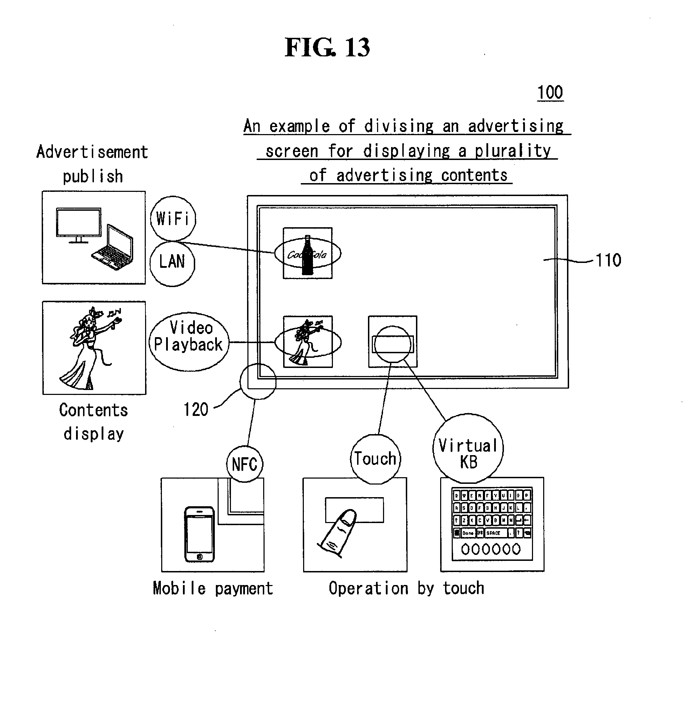

FIG. 13 illustrates an example of using a digital signage device 100 according to the present invention.

With reference to FIG. 13, display 110 of the digital signage device 100 can be divided into a plurality of advertising areas and each advertising area can display advertising contents different from each other. For example, the advertising area can display advertising contents uploaded by the user to the advertising service server 200 through WiFi or LAN. Also, the user can directly operate the digital signage device 100 by applying touch inputs on the display 110 implemented by a touchscreen. The digital signage device 100 is capable of processing mobile payment through the communication unit 120 based on short range wireless communication such as NFC.

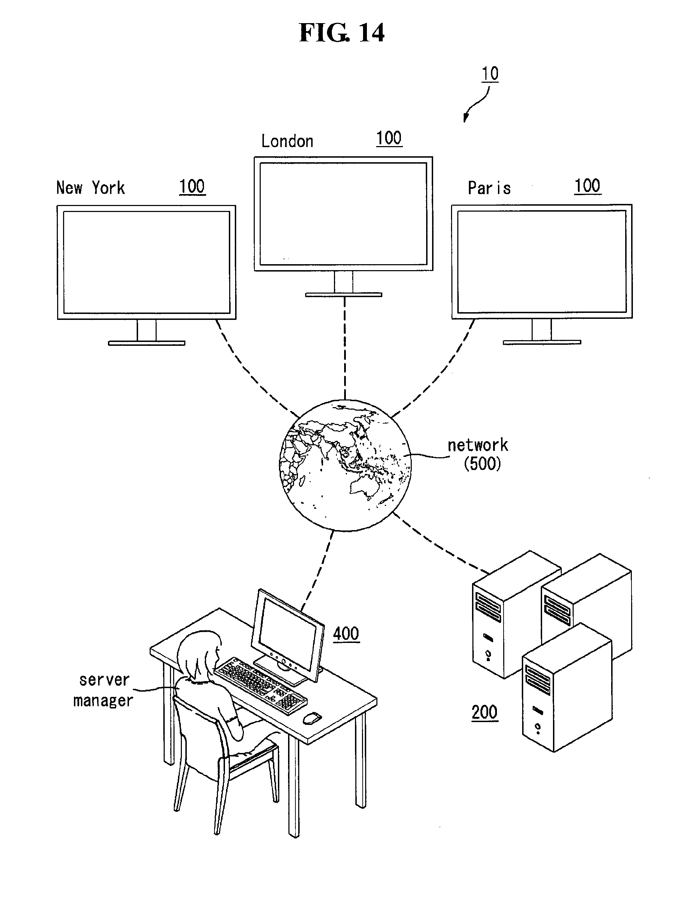

FIG. 14 illustrates a case where an advertising service system 10 according to the present invention is controlled by a server manager.

With reference to FIG. 14, the digital signage device 100, advertising service server 200, and server management device 400 are connected to each other through the network 500; the server manager controls a plurality of digital signage devices 100 and an advertising service server 200 installed at different locations by operating the server management device 400.

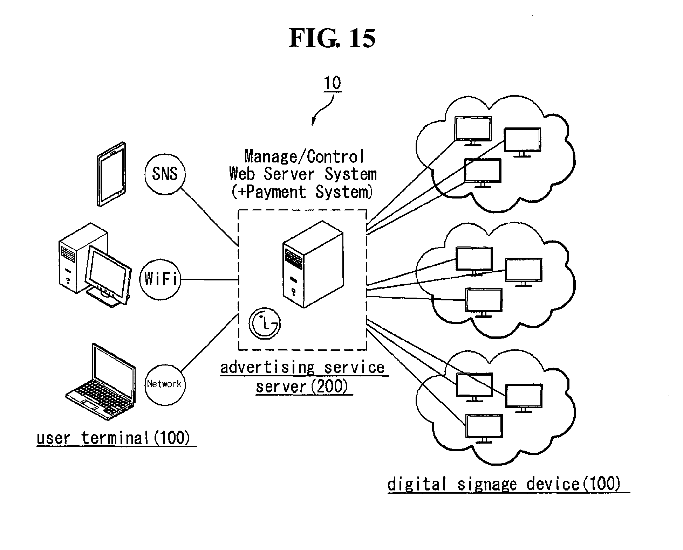

FIG. 15 illustrates an example of using an advertising service system according to the present invention. With reference to FIG. 15, the user of the advertising service system 10 can be an individual, a corporate organization, or a public organization such as a school.

These users can connect to an advertising service server 200 by using a smart phone, tablet PC, notebook, smart TV, desktop PC, and the like; upload their own advertising contents to the advertising service server 200; and set up various conditions imposed for carrying out an advertising service.

The advertising service server 200 not only carries out management/control of the advertising service system 10 but also runs an advertising service site for the users to enjoy an advertising service with ease. Also, the advertising service server 200 may carry out a payment function for advertising services.

Digital signage devices 100 installed at different locations from each other can display advertising contents according to the control of the advertising service server 200.

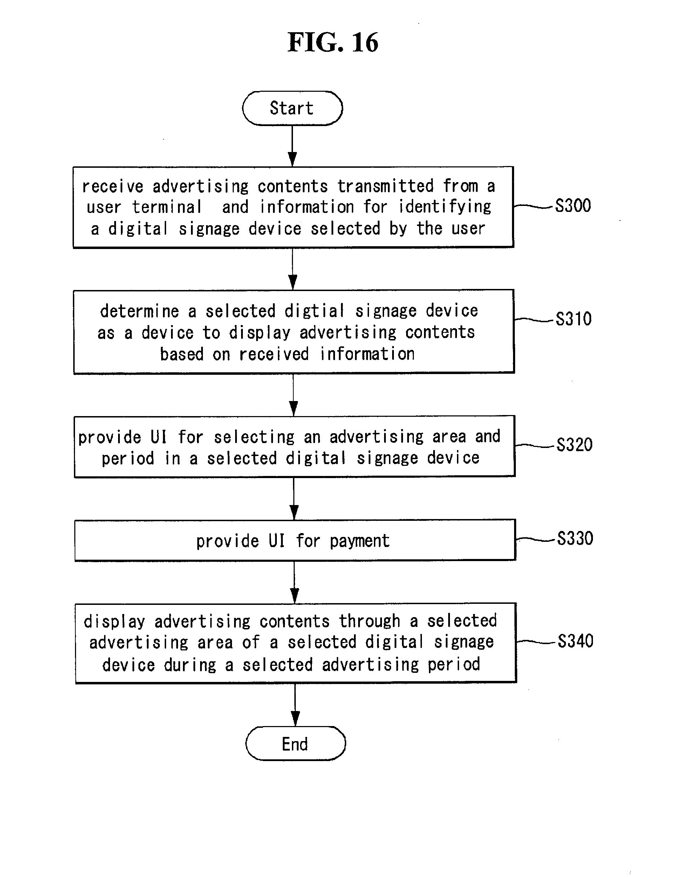

FIG. 16 is a flow diagram illustrating another example of an advertising service method carried out in an advertising service server 200 according to the present invention. In what follows, the advertising service method will be described with reference to related drawings.

Received are advertising contents transmitted from the user terminal 300 through the communication unit 210 and information for identifying a digital signage device selected by the user from among a plurality of digital signage devices managed by the advertising service server 200, S300. The advertising contents and the information can be transmitted from the user terminal 300 directly to the advertising service server 200 or can be transmitted to the advertising service server 200 via the selected digital signage device.

The determination module 270, based on the received information, determines the selected digital signage device as a digital signage device to display the received advertising contents S310. The received information may correspond to an identifier of the selected digital signage device. Then the determination module 270 digital signage-related information stored in the database 220 with respect to the identifier and determines the selected digital signage device as a device to display advertising contents.

The received information may correspond to the location information of the user terminal 300 at the time of transmitting advertising contents. Then the determination module 270, based on the location information, can determine the digital signage device closest to the user terminal 300 from among a plurality of digital signage devices controlled by the advertising service server 200 as a device to display the advertising contents.

FIGS. 4 and 16 assume that the controller 260 and the determination module 270 are separate from each other. Different from the above examples, the determination module 270 can form a part of the controller 260. This applies the same to the user interface module 230, the user management module 250, and the content providing module 240.

Again with reference to FIG. 16, if a digital signage device selected by the user is determined as a device to display advertising contents, the interfacing module 230 provide at least one of the selected digital signage device and the user terminal 300 with a user interface for selecting an advertising area and period in the selected digital signage device S320.

If an advertising area and period are selected through the user interface, the interfacing module 230 provides at least one of the selected digital signage device and the user terminal 300 with a user interface for carrying out payment for an advertising service S330.

If payment for an advertising service is completed through the user interface, the content providing module 240 displays advertising contents through the advertising area of the selected digital signage device during the selected time period S340.

Since providing the user interfaces described with reference to FIG. 16 through the user terminal 300 or a selected digital signage device will be easily realized by those skilled in the art based on the examples described with reference to FIGS. 6 to 9, detailed descriptions related to the above will be omitted.

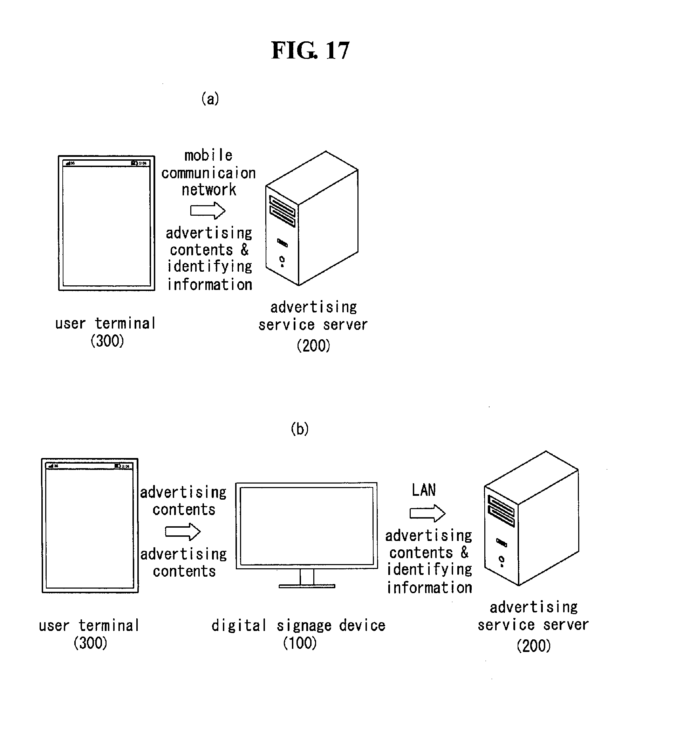

FIG. 17 illustrates an example of transmitting advertising contents and identifying information of a digital signage device from a user terminal 300 to an advertising service server 200 according to an advertising service method of FIG. 16.

With reference to FIG. 17(a), advertising contents and identification information of the digital signage device 100 selected by the user can be transmitted from the user terminal 300 to the advertising service server 200 through a mobile communication network. For example, the user terminal 300 can transmit advertising contents and identification information of a digital signage device 100 to the advertising service server 200 by using a mobile communication service such as SMS and MMS or by a using data communication service.

Meanwhile, the user terminal 300, based on short range wireless communication with the selected digital signage device 100, can obtain the identifier thereof. Such short range wireless communication technology includes NFC, Blutooth, ZigBee, infrared communication, and so on. However, the present invention is not limited to the above description.

With reference to FIG. 17(b), if the user terminal 300 transmits advertising contents to the digital signage device 100 through short range wireless communication, the digital signage device 100 transmits the advertising contents and its identifier to the advertising service server 200 through LAN (Local Area Network).

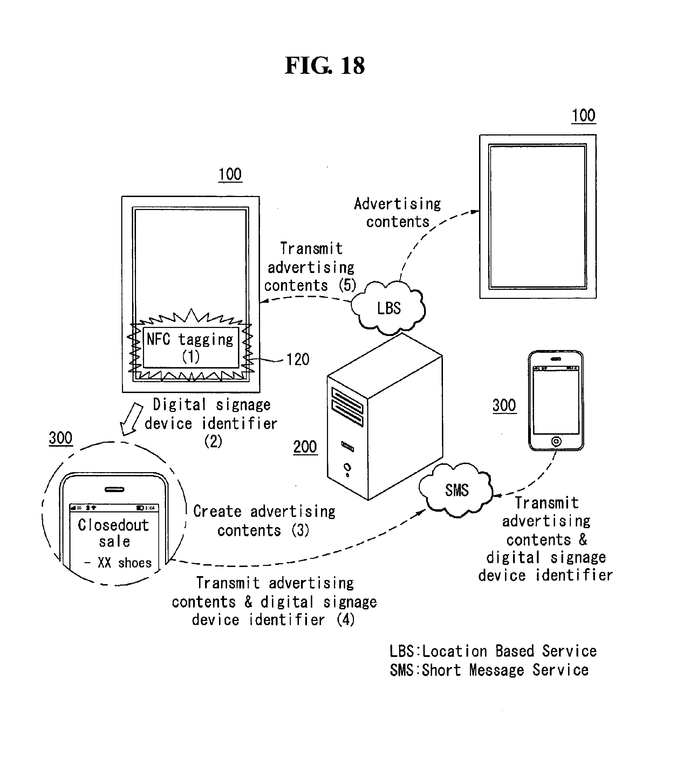

FIG. 18 illustrates a series of procedures through which an advertising service is carried out according to an advertising service method of FIG. 16.

If the user initiates NFC tagging between the user terminal 300 and the digital signage device 100 (1), the user terminal 300 obtains the identifier of the digital signage device 100 (2). Then the user writes a text, advertising contents, in the user terminal 300.

Next the user transmits the advertising contents created and the identifier of the digital signage device 100 to the advertising service server 200 by using an SMS service (4). Then the user carries out setting up various advertising conditions (advertising area, advertising period, and so on) and payment though various types of user interface provided by the advertising service server 200 (not shown). Next the advertising service server 200 transmits advertising contents to the digital signage device 100 according to the advertising conditions imposed by the user (5).

Different from FIG. 18, the advertising contents created by the user and the identification information of the digital signage device 100 can be transmitted to the advertising service server 200 through an MMS service or a data communication service depending on the size thereof.

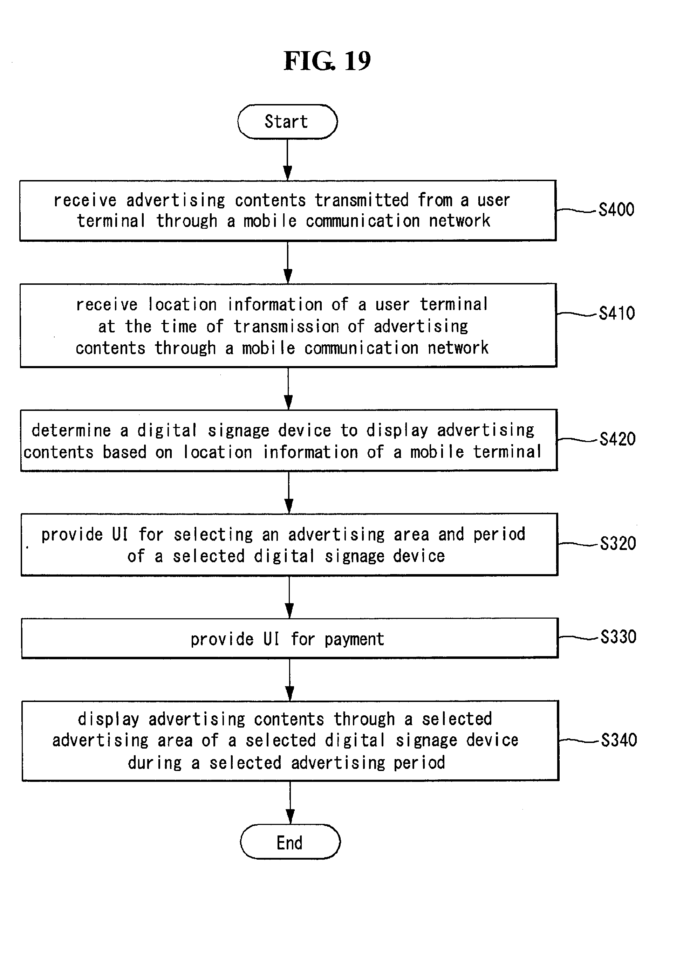

FIG. 19 is a flow diagram illustrating still another method of an advertising service method carried out in an advertising service server 200 according to the present invention. In what follows, the advertising service method will be described with reference to related drawings.

The communication unit 210 receives advertising contents transmitted from the user terminal 300 through a mobile communication network S400. And the communication unit 210 receives the location information of the user terminal 300 at the time of transmission of the advertising contents through the mobile communication network S410.

Then the determination module 270 determines, based on the received location information of the user terminal 300, a digital signage device to display the advertising contents from among a plurality of digital signage devices controlled by the advertising service server 200 S410. For example, the determination module 270 can select a digital signage device closest to the user terminal 300 as a device to display the advertising contents.

Next the advertising service server 200 carries out the steps of S320 to S340 shown in FIG. 16, thereby displaying the advertising contents through the digital signage device determined.

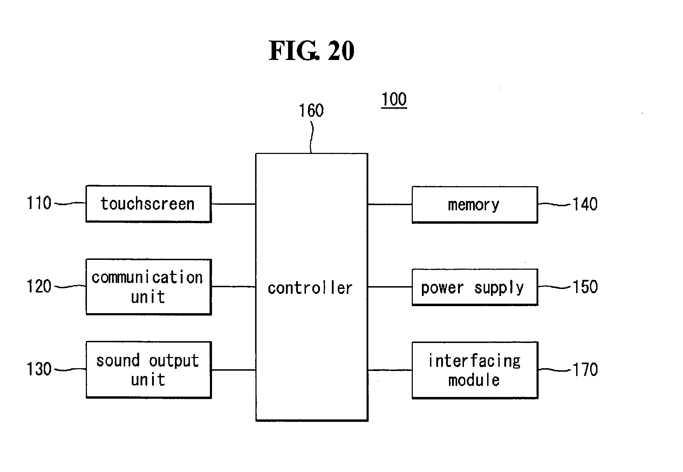

FIG. 20 is a block diagram of an advertising service server 200 according to the present invention. With reference to FIG. 20, the digital signage device 100 comprises a touchscreen 110, a communication unit 120, a sound output unit 130, a memory 140, a power supply 150, a controller 160, and an interfacing module 170. The constituting elements shown in FIG. 20 are not essential to construct an advertising service server; therefore, the digital signage device 200 may include more than the illustration of FIG. 20 or may include a smaller number of elements. In what follows, the constituting elements will be described one by one.

The touchscreen 110 can output image part of advertising contents under the control of the advertising service server 200. Also, the touchscreen 110 can display various types of information processed in the digital signage device 100. For example, the touchscreen 110 can display a user interface for the user to set up an advertising area and period, a user interface for carrying out payment for an advertising service, a user interface for selecting another digital signage device to display advertising contents, and so on.

The user interfaces can be provided by the interfacing module 170. Also, the interfacing module 170 can provide the user interfaces through the user terminal 300 rather than the digital signage device 100.

The interfacing module 170 and the controller 160 are shown separately from each other in FIG. 20. However, at least part of the interfacing module 170 can have a common hardware or software element(s) shared by the controller 260. For example, the interfacing module 170 and the controller 160 can be implemented in the same integrated circuit.

Meanwhile, the touchscreen 110 functions as an information receiving means as well as an information display means. In other words, the user can provide input information required for the user interfaces through a touch on the touchscreen 110.

The communication unit 120 can carry out wired/wireless communication with the user terminal 300 and the advertising service server 200. In other words, the digital signage device 100 can communicate various types of data required for an advertising service with the user terminal 300 and the advertising service server 200 through the communication unit 210. As a matter of course, the various types of data include advertising content itself.

The communication unit 120 can include a communication module for carrying out payment for an advertising service provided through the digital signage device 100 based on short range wireless communication. A typical example is an NFC communication module. However, the technical scope of the present invention is not limited to the example above.

The sound output unit 130 can output sound part of advertising contents under the control of the advertising service server 200. And the sound output unit 130 can output various types of sound signal related to the operation of the digital signage device 100.

The memory 140 can store a program required for operating the digital signage device 100. Also, the memory 140 temporarily or permanently stores data coming in or out through the communication unit 110. For example, the memory 140 stores various types of data related to an advertising service carried out by the digital signage device 100. At this time, the various types of data related to the advertising service may include advertising contents to be displayed through the digital signage device 100, a display schedule of advertising contents, information related to the user who provides advertising contents, and so on. However, the technical scope of the present invention is not limited to the above.

The memory 140 includes at least one type of storage medium among flash memory type, hard disk type, multimedia card micro type, card type memory (for example, SD or XD memory), RAM (Random Access Memory), SRAM (Static Random Access Memory), ROM (Read-Only Memory), EEPROM (Electrically Erasable Programmable Read-Only Memory), PROM (Programmable Read-Only Memory), magnetic memory, magnetic disk, and optical disk. The digital signage device 100 can operate in cooperation with a web storage providing a storage function of the memory 140 in the Internet.

The power supply 150 provides power required for individual constituting elements of the digital signage device 100. The power can be provided from an internal battery included in the power supply 150 or can be provided from an outside power source.

The controller 160 typically controls the overall operation of a digital signage device 100. The controller 160 carries out various computational tasks required for operating the digital signage device 100 and controls operation of other constituting elements of the digital signage device 100 to carry out an advertising service.

As a specific example, the controller 160, based on the information transmitted to and received from the user terminal 300 through wireless communication, can associate the data received through the user interfaces described above with advertising contents transmitted from the user terminal 300. In other words, the controller 160 can apply various types of data received through the user interfaces to the advertising contents and control the advertising service server 200 to apply the various types of data to the advertising contents.

As another specific example, the controller 160 can control the touchscreen 110 to display advertising contents received from the advertising service server 200 in an advertising area of the touchscreen selected by the user during an advertising period selected by the user.

Although the controller 160 is represented by one block in FIG. 20, the controller 160 can include a plurality of hardware and/or software components intended to carry out their own functions or roles.

Various embodiments implemented through the digital signage device 100 described here can be implemented in a recording medium which can be readable by a computer or a similar device by using software, hardware, or a combination of both.

As for software implementation, embodiments of a procedure or a function can be realized by along with separate software modules supporting operation or at least one function. Software codes are implemented by a software application written in a relevant programming language. Also, software codes are stored in the memory 140 and can be carried out by the controller 160.

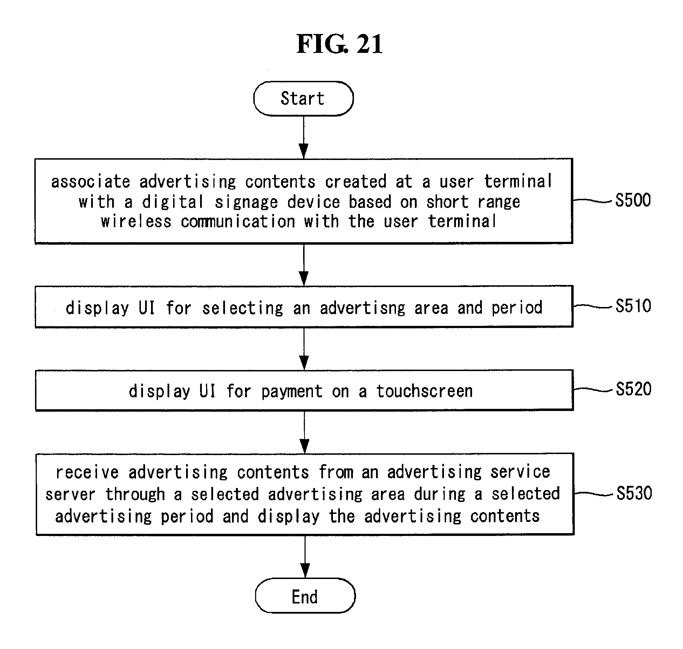

FIG. 21 is a flow diagram illustrating a further method of an advertising service method carried out in a digital signage device 100 according to the present invention. In what follows, the advertising service method will be described with reference to related drawings.

The controller 260 of the digital signage device 100 associates advertising contents created by the user terminal 300 with the digital signage device 100 based on short range wireless communication with the user terminal 300, S500. Then it can be noticed that the advertising contents created and transmitted by the user terminal 300 correspond to the contents to be displayed through the digital signage device 100. In other words, the controller 160 matches the advertising contents to the digital signage device 100.

Next the interfacing module 170 displays a user interface for selecting an advertising area of the touchscreen 110 through which the advertising contents are displayed and an advertising period on the touchscreen 110, S510. As described above, the user interface can be provided through the user terminal 300. If the advertising area and period are selected through the user interface, the interfacing module 170 displays on the touchscreen 110 a user interface for payment about an advertising service requested by the user S520. The user interface can also be provided through the user terminal 300.

After payment is completed, the controller 160 controls the touchscreen 110 and the sound output unit 130 to receive and display advertising contents from the advertising service server 200 through the selected advertising area during the selected advertising period S530. The input data coming through the user interface can be directly reflected on the advertising contents; this is because association between the digital signage device 100 and advertising contents has already been established through the S500 step carried out previously.

Meanwhile, similar to the examples above, the advertising contents can be transmitted in advance from the user terminal 300 to the advertising service server 200 and stored in the database 220 of the advertising service server 200. Also, the advertising contents can be transmitted in advance to the advertising service server 200 via the digital signage device 100 and stored in the database 220.

Since providing the user interfaces described with reference to FIG. 20 through the touchscreen 110 or the user terminal 300 will be easily realized by those skilled in the art based on the examples described with reference to FIGS. 6 to 9, detailed descriptions related to the above will be omitted.

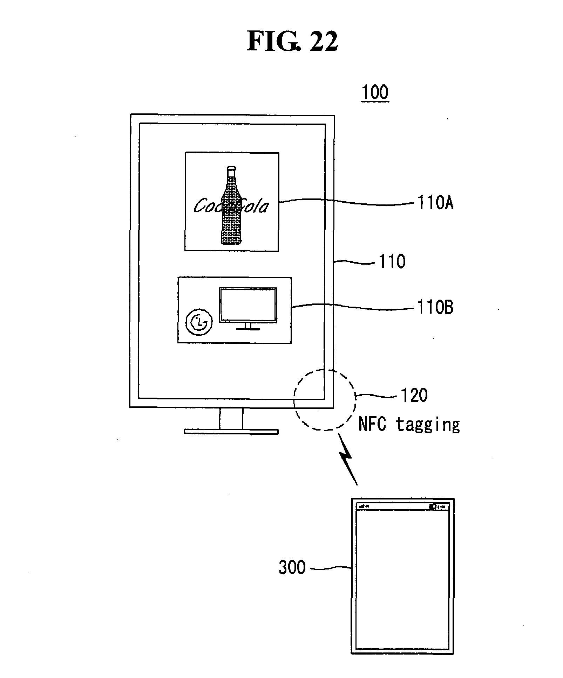

FIG. 22 illustrates an example where created advertising contents are associated with a digital signage device 100 and a user terminal 300 of the present invention according to an advertising service method of FIG. 21.

With reference to FIG. 22, while different advertising contents are displayed through two advertising areas 110A, 110B of the digital signage device 100, the user carries out NFC tagging of the user terminal 300 against the communication unit 120 including an NFC communication module. Then it is recognized that the advertising contents created at the user terminal 300 of the digital signage device 100 correspond to the contents to be displayed afterwards through the digital signage device 100.

Then the controller 160 of the digital signage device 100 can configure the data received after the NFC tagging from the user interface provided through the digital signage device 100 (for example, an advertising area or period) as the data to be applied to the advertising contents. And the digital signage device 100 now can transmit the data to the advertising service server 200.

Meanwhile the user terminal 300 obtains information about the digital signage device 100 through the NFC tagging and transmits the advertising contents and the information about the obtained digital signage device 100 to the advertising service server 200.

Then the digital signage device 100 and the advertising service server 200 recognize through information exchange between them that the advertising contents created and transmitted by the user terminal 300 match to the data received through the user interface.

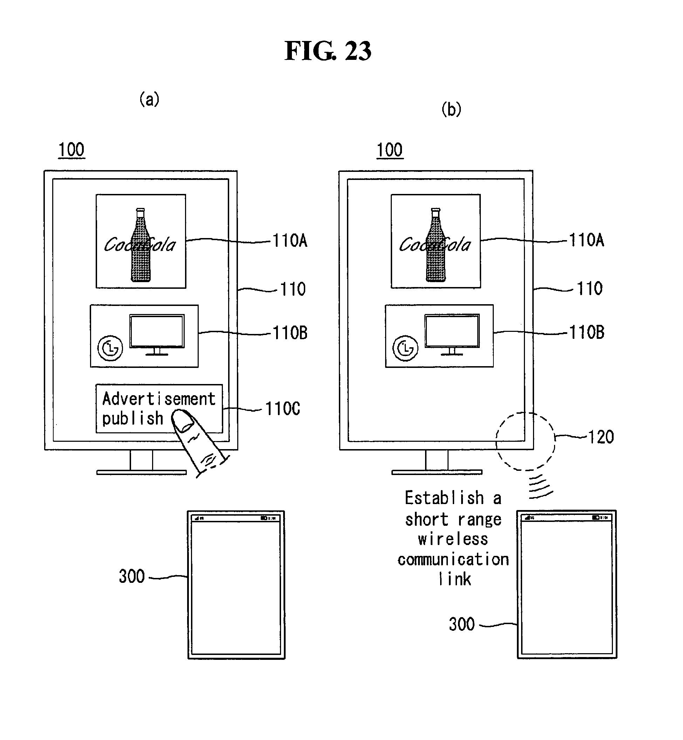

FIG. 23 illustrates another example where created advertising contents are associated with a digital signage device 100 and a user terminal 300 of the present invention according to an advertising service method of FIG. 21.

With reference to FIG. 23(a), the user touches an advertisement publish button displayed on the touchscreen 110. Then the communication unit 120 of the digital signage device 100 establishes a short range wireless communication link with the user terminal 300 and carries out data communication through the wireless communication link, thereby associating the digital signage device 100 with the advertising contents created in the user terminal 300.

Although not shown in the figure, the digital signage device 100, similar to the function provided by the advertising service server 200 described above, can display at least on one of the touchscreen 110 and the user terminal 300 a user interface for selecting a device to display advertising contents created in the user terminal 300 among a plurality of digital signage devices under the control of the advertising service server 200.

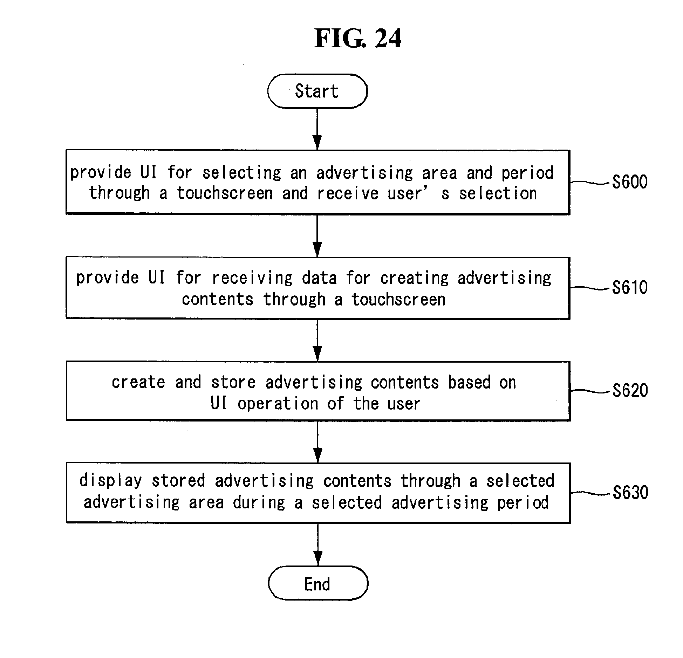

FIG. 24 is a flow diagram illustrating an additional example of an advertising service method carried out in a digital signage device 100. In what follows, the advertising service method will be described with reference to related drawings.

If the user touches a particular area of the touchscreen 110 of the digital signage device 100, the controller 160 provides a user interface for selecting an advertising area and period on the touchscreen 110; the user then selects an advertising area and period through the user interface and the controller 180 receives the user's selection S600.

Next the controller provides a user interface for providing data to create advertising contents through the touchscreen 110, S610. The user interface may be a virtual keyboard capable of receiving characters, numerals, special characters, and so on. Also, the user interface may correspond to a user interface for the user to create an image or retrieve an image from an external device. However, the technical scope of the present invention is not limited to the above.

If advertising contents are created based on the user's operation on the user interface, the controller 160 stores the created advertising contents in the memory 140, S620. Then if the selected advertising period is reached, the controller 160 displays the advertising contents stored in the memory 140 through the selected advertising area of the touchscreen 110 during the selected advertising period S630.

Meanwhile, different from FIG. 24, the controller 180 can transmit the created contents to the advertising service server 200 through the communication unit 120. Then the advertising servicer server 200 stores the received advertising contents in the database 220. Next if the selected advertising period is reached, the digital signage device 100 receives the advertising contents stored in the advertising servicer server 200 and displays the advertising contents through the touchscreen 110.

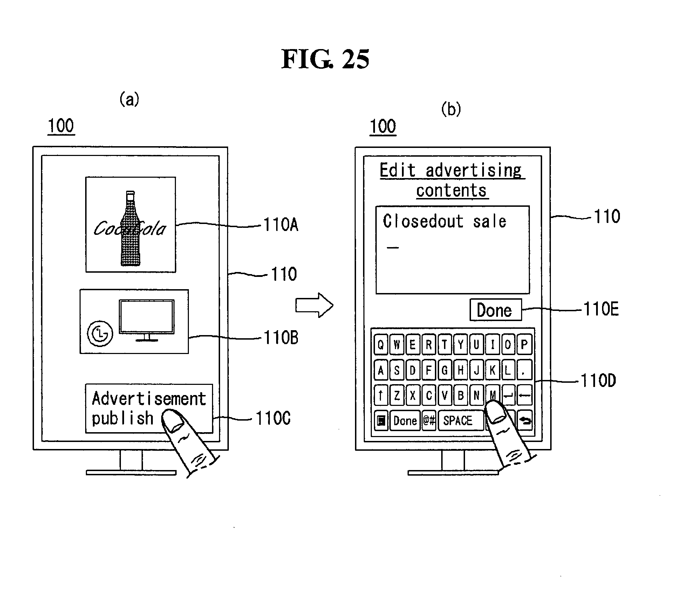

FIG. 25 illustrates one example of the user's creating advertising contents according to an advertising service method of FIG. 24.

FIG. 25(a) illustrates a case where the user touches an advertisement publish button 110C displayed on the touchscreen 110. Then the controller 160, as shown in FIG. 25(b), provides a virtual keyboard through the touchscreen 110 and the user is enabled to insert a text comprising advertising contents by operating the virtual keyboard 110D. If the user touches a completion button 110E after advertising contents are created, the created advertising contents are either stored in the memory 140 or transmitted to the advertising service server 200.

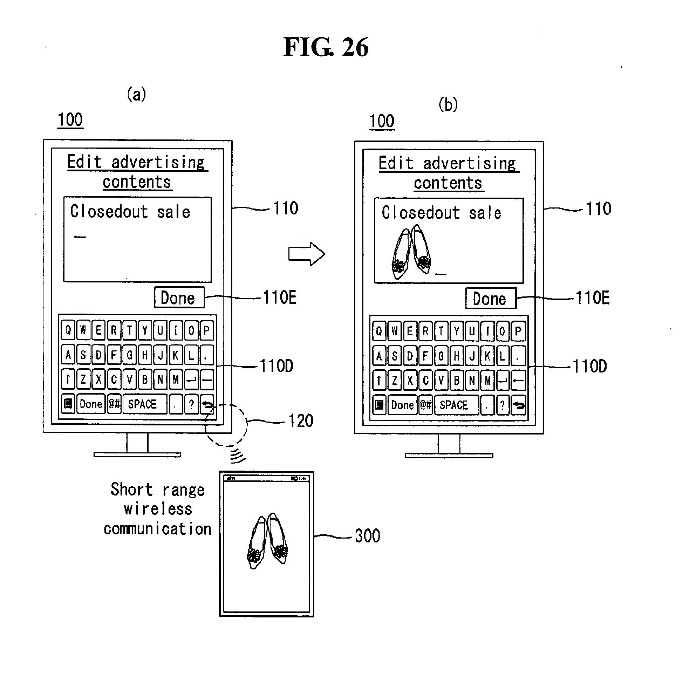

FIG. 26 illustrates a case where the user additionally inserts an image stored in the user terminal 300 to advertising contents according to the advertising service method illustrated in FIG. 24.

FIG. 26(a) illustrates a case where a short range wireless communication link is established with the communication unit 120 when a particular image in the user terminal 300 is selected while the user is entering phrases comprising advertising contents. Then the controller 160, as shown in FIG. 26(b), can additionally insert the particular image to the advertising contents being created. Meanwhile the short range wireless communication link may correspond to an NFC link formed by tagging with the user terminal 300.

In other words, part of the advertising contents created in the digital signage device 100 may have been received from an external device through the communication unit 120. However, the method of receiving part of advertising contents form the external device is not limited to short range wireless communication.

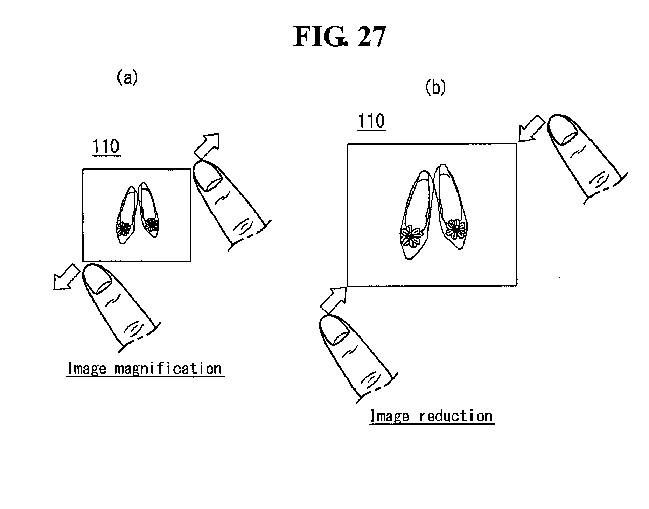

FIG. 27 illustrates a case where the user modifies an image included in advertising contents by using a touch input on a touchscreen 110 of a digital signage device 100 according to the present invention.

With reference to FIG. 27(a), the user can magnify the image through a touch operation on the image. Also, with reference to FIG. 27(b), the user can reduce the image through a touch operation on the image.

Although not shown in the figure, the digital signage device 100 can provide another user interface for modifying an image comprising advertising contents based on the user's touch input on the touchscreen 110. Also, the digital signage device 100 can provide a user interface for changing the size or color of a text comprising advertising contents based on the user's touch input on the touchscreen 110. In other words, the digital signage device 100 can provide the user with various user interfaces required for creating advertising contents as well as the virtual keyboard through the touchscreen 110.

Each of the advertising service methods according to the present invention described above can be implemented in the form of a program which can be carried out through various computer means and recorded in a computer-readable medium. The computer-readable medium can include program commands, data file, data structure, and the like separately or in combination thereof. A program recorded in the medium may be the one designed and configured particularly for the present invention or a reusable one well-known to those skilled in the computer software field.

Examples of a computer-readable recording medium include a magnetic media such as a hard disk, a floppy disk, and a magnetic tape; an optical media such as CD-ROM and DVD; a magnetooptical media such as floptical disk; and hardware devices developed specially for storing and carrying out program commands such as ROM, RAM, flash memory, and so on. Examples of a program include not only machine codes generated by a compiler but also high level language codes which can be executed by a computer using an interpreter. The hardware device can be configured by one or more software modules to carry out the operation of the present invention and vice versa.

As described above, the present invention has been described with a limited set of embodiments and drawings; however, the present invention is not limited to the embodiment of this document and it should be understood by those skilled in the art that various modifications and changes of the present invention are possible without departing from the technical scope of the present invention.

Therefore, the technical scope of the present invention should not be limited by the embodiments described above but should be defined not only by the appended claims described later but also by the equivalents of the claims.

## Claims

1. An advertising service server, comprising:
a communication unit configured to receive advertising contents transmitted from a user terminal and receive information for identifying a digital signage device;
a controller configured to select a digital signage device to display advertising contents from among a plurality of digital signage devices based on the received information;
an interfacing module configured to provide a user interface intended for selecting an advertising area in a digital signage device to display advertising contents and selecting an advertising period in a digital signage device to display advertising contents through at least one of the user terminal and the selected digital signage device; and
a contents providing module configured to display advertising contents received from the user terminal through an advertising area selected through the user interface during an advertising period selected through the user interface.

2. The advertising service server of claim 1, wherein advertising contents transmitted from the user terminal and information for selecting a digital signage device to display the advertising contents are received from the user terminal through a mobile communication network.

3. The advertising service server of claim 2, wherein the advertising contents transmitted from the user terminal and the information for selecting a digital signage device to display the advertising contents are transmitted to the server by a short message service provided through the mobile communication network.

4. The advertising service server of claim 2, wherein the information for selecting a digital signage device to display advertising contents is an identifier of a particular digital signage device obtained by the user terminal based on short range wireless communication with the particular digital signage device.

5. The advertising service server of claim 2, wherein the information for selecting a digital signage device to display advertising contents is location information of the user terminal at the time of transmission of the advertising contents from the user terminal.

6. The advertising service server of claim 1, wherein the advertising contents transmitted from the user terminal are transmitted from the user terminal and received by the server via a particular digital signage device selected by the user, and
the information for selecting a digital signage device to display advertising contents is an identifier of the particular digital signage device.

7. The advertising service server of claim 1, wherein the interfacing module further provides at least one of the user terminal and the selected digital signage device with a user interface for approving a charge for displaying advertising contents received from the user terminal through the selected digital signage device.

8. The advertising service server of claim 1, further comprising a user management module notifying the user terminal of expiration of an advertising service before expiration of the selected advertising period.

9. A digital signage device, comprising:
a touchscreen;
a communication unit configured to carry out a communication function with a user terminal and an advertising service server;
an interfacing module configured to provide a user interface intended for selecting an advertising area and period according to which advertising contents are displayed through at least one of the user terminal and the touchscreen; and
a controller configured to match an advertising area and period selected through the user interface to advertising contents transmitted from the user terminal based on short range wireless communication with the user terminal, receive from the advertising service server the advertising contents transmitted from the user terminal, and display the advertising contents on an advertising area selected through the user interface during an advertising period selected through the user interface.

10. The digital signage device of claim 9, wherein the advertising contents transmitted from the user terminal are transmitted from the user terminal to the advertising service server through a mobile communication network and stored in the advertising service server.

11. The digital signage device of claim 9, wherein the advertising contents transmitted from the user terminal are transmitted to the advertising service server via the digital signage device and stored in the advertising service server.

12. The digital signage device of claim 9, wherein the controller selects another digital signage device to display advertising contents and provides a user interface for selecting an advertising area and period corresponding to the another digital through at least one of the user terminal and the selected digital signage device.

13. The digital signage device of claim 9, wherein the controller provides a user interface for approving a charge for displaying the advertising contents transmitted from the user terminal through the digital signage device through at least one of the user terminal and the selected digital signage device.
